(19) Europäisches Patentamt
European Patent Office
Office européen des brevets

(11) **EP 0 950 693 B1**

(12) **EUROPÄISCHE PATENTSCHRIFT**

(45) Veröffentlichungstag und Bekanntmachung des Hinweises auf die Patenterteilung:
**18.08.2004 Patentblatt 2004/34**

(51) Int Cl.$^7$: **C09C 1/00**, C09C 1/46

(21) Anmeldenummer: **99106680.4**

(22) Anmeldetag: **01.04.1999**

(54) **Mehrschichtiges Perlglanzpigment auf Basis eines opaken Substrates**

Multilayer pearlescent pigment on the basis of an opaque substrate

Pigment nacré multicouche à base d'un substrat opaque

(84) Benannte Vertragsstaaten:
**DE ES FI FR GB IT**

(30) Priorität: **18.04.1998 DE 19817286**

(43) Veröffentlichungstag der Anmeldung:
**20.10.1999 Patentblatt 1999/42**

(73) Patentinhaber: **MERCK PATENT GmbH**
**64293 Darmstadt (DE)**

(72) Erfinder:
• **Andes, Stephanie**
**63452 Hanau (DE)**
• **Brückner, Dieter, Dr.**
**64289 Darmstadt (DE)**
• **Fuchs-Pohl, Gerald, Dr.**
**64331 Weiterstadt (DE)**
• **Kuntz, Matthias, Dr.**
**64342 Seeheim (DE)**
• **Pfaff, Gerhard, Dr.**
**64839 Münster (DE)**
• **Vogt, Reiner, Dr.**
**64289 Kranichstein (DE)**

(56) Entgegenhaltungen:
**EP-A- 0 509 352**      **EP-A- 0 803 549**
**DE-A- 19 618 569**

• **PATENT ABSTRACTS OF JAPAN vol. 007, no. 086 (C-161), 9. April 1983 (1983-04-09) & JP 58 017171 A (SHISEIDO KK), 1. Februar 1983 (1983-02-01)**

**Beschreibung**

Die Erfindung betrifft ein mehrschichtiges Interferenzpigment, bestehend aus alternierenden Schichten eines Materials mit niedriger Brechzahl und eines Materials mit hoher Brechzahl oder eines Metalls auf einem absorbierenden plättchenförmigen Substrat, das opak oder semiopak ist.

Mehrschichtige Pigmente mit alternierenden Schichten aus einem Material mit hoher Brechzahl und einem Material mit niedriger Brechzahl sind bekannt. Es handelt sich hierbei vorwiegend um Metalloxide. Das Material mit hoher Brechzahl kann aber auch durch eine semitransparente Metallschicht ersetzt sein. Die Metalloxidschichten werden entweder im Naßverfahren durch Auffällen der Metalloxidhydrate aus einer Metallsalzlösung auf ein Trägermaterial oder durch Aufdampfen oder Sputtern im Vakuum hergestellt. So beschreibt US 4 434 010 ein mehrschichtiges Interferenzpigment, bestehend aus einer zentralen Schicht eines reflektierenden Materials (Aluminium) und alternierenden Schichten zweier transparenter, dielektrischer Materialien mit hoher und niedriger Brechzahl, beispielsweise Titandioxid und Siliziumdioxid beiderseits der zentralen Aluminiumschicht. In einer weiteren Ausführungsform des Pigmentes werden die auf die zentrale Aluminiumschicht folgenden Schichten durch Magnesiumfluorid und Chrom gebildet. Dieses Pigment wird für den Druck von Wertpapieren eingesetzt.

JP H7-759 (A) beschreibt ein mehrschichtiges Interferenzpigment mit metallischem Glanz. Es besteht aus einem Substrat, das mit alternierenden Schichten von Titandioxid und Siliziumdioxid beschichtet ist. Das Substrat wird aus Aluminium-, Gold- oder Silberplättchen oder Plättchen aus Glimmer und Glas, die mit Metallen beschichtet sind, gebildet.

Alle Pigmenttypen, die als zentrale Schicht eine opake Metallschicht aufweisen, haben den Nachteil, daß an dieser Reflexionsschicht alle Wellenlängen zurückgeworfen werden mit dem Effekt, daß zwar ein hoher Glanz erzielt wird, aber gleichzeitig die eigentliche Interferenzfarbe überstrahlt wird.

EP 0 753 545 beschreibt goniochromatische Glanzpigmente auf der Basis von titandioxidbeschichteten Glimmerpigmenten, deren $TiO_2$-Beschichtung teilweise reduziert ist. Die Titandioxidschicht ist durch die bei der Reduktion entstehenden Titansuboxide, Titanoxynitride sowie Titannitride blau bis violett gefärbt.

EP-A-0 803 549 beschreibt farbige Glanzpigmente mit einem transparenten oder metallisch reflektierenden Kern, welche mindestens eine Beschichtung der Zusammensetzung $SiO_{0.25}$ bis $SiO_{0.95}$ sowie gegebenenfalls weitere Beschichtungen aufweisen. Die Siliziumoxidschicht wird durch Aufdampfen von metallischem Silizium in Gegenwart von Sauerstoff hergestellt.

In DE 196 18 569 A werden mehrschichtige Interferenzpigmente offenbart, welche aus einem transparenten Trägermaterial bestehen, das mit alternierenden Schichten von Metalloxiden mit niedriger und hoher Brechzahl beschichtet ist, wobei die Differenz der Brechzahlen mindestens 0,1 beträgt, und wobei die mehrschichtigen Interferenzpigmente durch alternierende Beschichtung des transparenten Trägermaterials mit Metalloxiden im nasschemischen Verfahren erhältlich sind.

Alle genannten Multischichtinterferenzpigmente basieren auf einem transparenten Substrat oder einer opaken, reflektierenden Metallschicht als mittlerer Schicht. Alle Pigmente mit Multischichtaufbau auf einem transparenten Substrat, beispielsweise Glimmer, $SiO_2$-Flakes oder $TiO_2$-Flakes haben den Nachteil, daß bei Lacken zu diesen Pigmenten häufig auch Absorptionspigmente zugemischt werden müssen, um ein ausreichendes Deckvermögen zu erzielen. Beim Zumischen von Absorptionspigmenten wird aber der Farbflop des Interferenzpigmentes stark abgeschwächt.

Alle Pigmente mit Multischichtaufbau auf einer zentralen Metallschicht haben den Nachteil, daß an dieser Reflexionsschicht alle Wellenlängen zurückgeworfen werden. Um diesen Effekt zu verringern, werden auch bei diesen hochdeckenden Pigmenten Absorptionspigmente zugemischt, wodurch ebenfalls eine Abschwächung des Farbflops erfolgt.

Aus der nicht vorveröffentlichten DE 197 07 805 sind Multischicht-Interferenzpigmente mit einer absorbierenden Mittelschicht bekannt, die durch Aufdampfen oder Sputtern der einzelnen Schichten auf ein endloses Band, das mit einer Ablöseschicht versehen ist, hergestellt werden. Diese Pigmente haben den Nachteil, daß beim Ablösen des getrockneten Films vom Band und durch die nachfolgende Zerkleinerung Partikel mit offenen Bruchkanten entstehen. Da diese Bruchkanten Streuzentren für das einfallende Licht bilden, wird der Glanz des Pigmentes vermindert, was bis zu einem Verschwinden des Interferenzeffektes führen kann.

Aufgabe der Erfindung ist es, ein Interferenzpigment mit kräftigen Interferenzfarben, einer starken Winkelabhängigkeit der Interferenzfarben und einem hohen Deckvermögen zur Verfügung zu stellen.

Diese Aufgabe wird gemäß der Erfindung gelöst durch ein Perlglanzpigment auf Basis von mehrfach beschichteten, plättchenförmigen, nichtmetallischen Substraten, die opak oder semiopak sind und die mindestens

a) eine erste Schicht aus einem Metalloxid mit hoher Brechzahl, ausgewählt aus der Gruppe bestehend aus $TiO_2$, $ZrO_2$, $Fe_2O_3$, $(SnSb)O_2$, $Fe_3O_4$, $Cr_2O_3$, $ZnO$ oder einem Gemisch aus diesen Oxiden, oder einem Metall,

b) eine zweite Schicht aus einem Metalloxid mit niedriger Brechzahl, ausgewählt aus der Gruppe bestehend aus $SiO_2$, $Al_2O_3$ oder einer Mischung daraus,

c) eine dritte Schicht aus einem Metalloxid mit hoher Brechzahl, ausgewählt aus der Gruppe bestehend aus $TiO_2$, $ZrO_2$, $Fe_2O_3$, $(SnSb)O_2$, $Fe_3O_4$, $Cr_2O_3$, ZnO oder einem Gemisch aus diesen Oxiden, oder einem Metall und gegebenenfalls
d) eine Nachbeschichtung aufweisen.

Weiterhin wird diese Aufgabe gemäß der Erfindung durch ein Verfahren zur Herstellung der erfindungsgemäßen Pigmente gelöst, indem das Substrat in Wasser suspendiert und abwechselnd mit einem Metalloxidhydrat mit hoher Brechzahl, ausgewählt aus der Gruppe bestehend aus Oxidhydraten des Titans, Zirkons, Eisens, Chroms, Zinks, Zinns und Antimons und aus Gemischen aus diesen Oxidhydraten und einem Metalloxidhydrat mit niedriger Brechzahl, ausgewählt aus der Gruppe bestehend aus Oxidhydraten des Siliziums, Aluminiums und Mischungen daraus, durch Zugabe und Hydrolyse der entsprechenden, wasserlöslichen Metallverbindungen beschichtet wird, wobei durch gleichzeitige Zugabe von Säure oder Base der für die Fällung des jeweiligen Metalloxidhydrates notwendige pH-Wert eingestellt und konstant gehalten wird und anschließend das beschichtete Substrat aus der wässrigen Suspension abgetrennt, getrocknet und gegebenenfalls kalziniert wird.

Gegenstand der Erfindung ist außerdem die Verwendung der erfindunggemäßen Pigmente zur Pigmentierung von Lacken, Druckfarben, Kunststoffen, Glasuren für Keramiken und Gläser und Kosmetika.

Weiterhin ist Gegenstand der Erfindung die Verwendung der erfindungsgemäßen Pigmente zur Pigmentierung von Wert- und Sicherheitspapieren und von Verpackungen sowie zur Lasermarkierung von polymeren Materialien und Papieren.

Hierfür können sie als Mischungen mit handelsüblichen Pigmenten, beispielsweise anorganischen und organischen Absorptionspigmenten, Metalleffektpigmenten und LCP-Pigmenten, eingesetzt werden.

Als Material mit hoher Brechzahl werden Metalloxide oder Mischungen von Metalloxiden mit oder ohne absorbierenden Eigenschaften sowie Metalle eingesetzt. Diese werden aus $TiO_2$, $ZrO_2$, $Fe_2O_3$, $Fe_3O_4$, $Cr_2O_3$, ZnO oder $(SnSb)O_2$ ausgewählt oder bestehen aus dünnen Metallschichten, beispielsweise aus Nickel oder Aluminium.

Als Material mit niedriger Brechzahl werden Metalloxide, beispielsweise $Al_2O_3$ oder $SiO_2$ oder deren Gemische eingesetzt.

Die Dicke der Schichten der Materialien mit hoher und niedriger Brechzahl ist wesentlich für die optischen Eigenschaften des Pigmentes. Da ein Produkt mit kräftigen Interferenzfarben erwünscht ist, muß die Dicke der Schichten aufeinander eingestellt werden. Wenn n die Brechzahl einer Schicht und d ihre Dicke ist, ergibt sich die Interferenzfarbe, in der eine dünne Schicht erscheint, aus dem Produkt von n und d, d.h. der optischen Dicke. Die bei Normallichteinfall im reflektierten Licht entstehenden Farben eines solchen Filmes ergeben sich aus einer Verstärkung des Lichtes der Wellenlänge $\lambda = \frac{4}{2N-1} \cdot nd$ und durch Schwächung von Licht der Wellenlänge $\lambda = \frac{2}{N} \cdot nd$, wobei N eine positive ganze Zahl ist. Die bei zunehmender Filmdicke erfolgende Variation der Farbe ergibt sich aus der Verstärkung bzw. Schwächung bestimmter Wellenlängen des Lichtes durch Interferenz. Beispielsweise hat ein 115 nm dicker Film aus Titandioxid mit der Brechzahl 1,94 eine optische Dicke von 115 x 1,94 = 223 nm, und Licht der Wellenlänge 2 x 223 nm = 446 nm (blau) wird bei der Reflexion geschwächt, so daß das reflektierte Licht gelb ist. Bei mehrschichtigen Pigmenten wird die Interferenzfarbe durch die Verstärkung bestimmter Wellenlängen bestimmt und wenn mehrere Schichten in einem vielschichtigen Pigment gleiche optische Dicke besitzen, wird die Farbe des reflektierten Lichtes mit zunehmender Zahl der Schichten intensiver und satter. Darüber hinaus kann durch geeignete Wahl der Schichtdicken eine besondere starke Variation der Farbe in Abhängigkeit vom Betrachtungswinkel erreicht werden. Es bildet sich ein ausgeprägter Farbflop aus, der für die Pigmente gemäß der Erfindung erwünscht sein kann. Die Dicke der einzelnen Schichten, unabhängig von ihrer Brechzahl, beträgt bei Materialien mit hoher Brechzahl 10 bis 300 nm, bevorzugt 20 bis 200 nm. Die Dicke der Metallschichten liegt etwa bei 5 bis 35 nm.

Bei niedrigbrechenden Materialien beträgt die Schichtdicke für Pigmente mit intensiven Interferenzfarben 2 bis 300 nm, bevorzugt 40 bis 150 nm und für Pigmente mit einem ausgeprägten Farbflop 2 bis 800 nm, bevorzugt 200 bis 600 nm. Die Differenz der Brechzahlen zwischen einer Schicht aus einem hochbrechenden und einer Schicht aus einem niedrigbrechenden Material beträgt mindestens 0,1.

Als Substrat für die erfindungsgemäßen Pigmente werden plättchenförmige Materialien eingesetzt, die vollständig oder teilweise das einfallende Licht absorbieren. Beispiele für vollständig absorbierende Substrate sind Graphitplättchen und Pigmente auf Basis von Graphit, wie sie in US 5 228 911 näher beschrieben werden. Die Graphitplättchen werden in einer Sauerstoff enthaltenden Atmosphäre auf 200 bis 500 °C erhitzt. Dadurch werden auf der Graphitoberfläche Carboxylgruppen und phenolische Hydroxylgruppen gebildet, die die Haftung der Metalloxidschicht verbessern. Bevorzugt wird Titandioxid verwendet. Die Abscheidung des Titandioxids erfolgt nach bekannten Verfahren. Die Graphitplättchen sind im Handel frei verfügbar.

Weiterhin sind als vollständig absorbierendes Substrat Ilmenitpigmente und Eisenoxidpigmente geeignet, wie sie in US 4 867 793 beschrieben werden. Es handelt sich hierbei um Interferenzpigmente, die aus Glimmer und einer Schicht aus Magnetit ($FeO \cdot Fe_2O_3$) oder Ilmenit ($FeTiO_3$) bestehen. Die Magnetitschicht wird erhalten, indem man das Eisenoxid aus einer Eisen (II)-salzlösung in Gegenwart eines Oxidationsmittels abscheidet oder eine nach bekannten Verfahren abgeschiedene $Fe_2O_3$-Schicht bei erhöhten Temperaturen einer reduzierenden Atmosphäre aussetzt.

Wird die Fe$_2$O$_3$-Schicht auf eine Titandioxidschicht abgeschieden und das Produkt bei über 800 °C in einer reduzierenden Atmosphäre kalziniert, bildet sich eine Schicht aus Eisentitanat (FeTiO$_3$) aus, das als Ilmenit bezeichnet wird.

Weiterhin kann als Substrat im Sinne der Erfindung auch mit Pseudobrookit beschichteter Glimmer eingesetzt werden, dessen Herstellung in US 5 009 711 näher beschrieben wird.

Als Substrat sind auch Interferenzpigmente gemäß US 5 693 134 geeignet, die aus einem plättchenförmigen Substrat, einer ersten Schicht aus Titandioxid und einer zweiten, äußeren Schicht aus einem Mischoxid von Kupfer und Mangan der allgemeinen Formel Cu$_X$Mn$_{3-X}$O$_4$ bestehen.

Als weiteres opakes Substrat können auch mit Graphit beschichteter Glimmer bzw. mit Graphit beschichtete Glimmerpigmente verwendet werden. Ihre Herstellung ist in US 5 271 771 beschrieben.

Glimmer oder mit Metalloxiden beschichteter Glimmer wird dem Gasstrom eines leicht flüchtigen Kohlenwasserstoffs bei 400 bis 1000 °C ausgesetzt oder auf das Ausgangsprodukt wird eine flüssige oder feste kohlenstoffhaltige Verbindung aufgebracht und anschließend pyrolysiert, wobei bei beiden Varianten unter Ausschluß von Sauerstoff gearbeitet wird. In beiden Fällen erhält man plättchenförmige Partikel, die von einer dünnen Graphitschicht überzogen sind.

Abhängig von der Schichtdicke erhält man ein Produkt, das vollständig absorbiert und damit opak ist oder welches nur teilweise absorbiert und damit semitransparent ist. Auch dieses Material ist als Substrat für die erfindungsgemäßen Pigmente geeignet.

Als teilweise absorbierende Substrate sind auch Carbon Inclusion Pigmente gemäß DE 195 02 231 einsetzbar. Diese mehrschichtigen Pigmente enthalten Ruß in der äußeren Titandioxidschicht oder in der darunter befindlichen Metalloxidschicht. Sie sind erhältlich durch Kalzinieren des beschichteten plättchenförmigen Substrates bei 500 bis 1000 °C unter Inertgasbedingungen.

Weiterhin können SiO$_2$-Flakes mit eingelagertem Ruß als teilweise absorbierende Substrate eingesetzt werden. Die SiO$_2$-Flakes werden gemäß der Internationalen Anmeldung WO 93/08237 auf einem endlosen Band durch Hydrolyse und Verfestigung einer Wasserglaslösung hergestellt. Dabei wird der Ruß in die sich bildende Matrix eingearbeitet.

Die Metalloxidschichten werden vorzugsweise naßchemisch aufgebracht, wobei die zur Herstellung von Perlglanzpigmenten entwickelten naßchemischen Beschichtungsverfahren angewendet werden können; derartige Verfahren sind z.B. beschrieben in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 oder auch in weiteren Patentdokumenten und sonstigen Publikationen.

Zur Beschichtung werden die Substratpartikel in Wasser suspendiert und mit einem oder mehreren hydrolysierbaren Metallsalzen bei einem für die Hydrolyse geeigneten pH-Wert versetzt, der so gewählt wird, daß die Metalloxide bzw. Metalloxidhydrate direkt auf den Partikeln niedergeschlagen werden, ohne daß es zu Nebenfällungen kommt. Der pH-Wert wird üblicherweise durch gleichzeitiges Zudosieren einer Säure oder Base konstant gehalten. Anschließend werden die Pigmente abgetrennt, gewaschen und getrocknet und gegebenenfalls geglüht, wobei die Glühtemperatur im Hinblick auf die jeweils vorliegende Beschichtung optimiert werden kann. Falls gewünscht können die Pigmente nach Aufbringen einzelner Beschichtungen abgetrennt, getrocknet und ggf. geglüht werden, um dann zur Auffällung der weiteren Schichten wieder resuspendiert zu werden.

Weiterhin kann die Beschichtung auch in einem Wirbelbettreaktor durch Gasphasenbeschichtung erfolgen, wobei z.B. die in EP 0 045 851 und EP 0 106 235 zur Herstellung von Perlglanzpigmenten vorgeschlagenen Verfahren entsprechend angewendet werden können.

Als Metalloxid mit hoher Brechzahl wird bevorzugt Titandioxid und als Metalloxid mit niedriger Brechzahl Siliziumdioxid verwendet.

Für das Aufbringen der Titandioxidschichten wird das im US 3 553 001 beschriebene Verfahren bevorzugt.

Zu einer auf etwa 50-100 °C, insbesondere 70-80 °C erhitzten Suspension des zu beschichtenden Materials wird langsam eine wäßrige Titansalzlösung zugegeben, und es wird durch gleichzeitiges Zudosieren einer Base, wie z.B. wäßrige Ammoniaklösung oder wäßrige Alkalilauge, ein weitgehend konstanter pH-Wert von etwa 0,5-5, insbesondere etwa 1,5-2,5 eingehalten. Sobald die gewünschte Schichtdicke der TiO$_2$-Fällung auf dem Substrat erreicht ist, wird die Zugabe der Titansalzlösung und der Base gestoppt.

Dieses, auch als Titrationsverfahren bezeichnete Verfahren zeichnet sich dadurch aus, daß ein Überschuß an Titansalz vermieden wird. Das wird dadurch erreicht, daß man pro Zeiteinheit nur eine solche Menge an Titansalzlösung zuführt, wie sie für eine gleichmäßige Beschichtung mit dem hydratisierten TiO$_2$ erforderlich ist und wie pro Zeiteinheit von der verfügbaren Oberfläche der zu beschichtenden Substratteilchen aufgenommen werden kann. Es entstehen deshalb keine hydratisierten Titandioxidteilchen, die nicht auf der zu beschichtenden Oberfläche niedergeschlagen sind.

Für das Aufbringen der Siliziumdioxidschichten ist folgendes Verfahren anzuwenden: Zu einer auf etwa 50-100 °C, insbesondere 70-80 °C erhitzten Suspension des zu beschichtenden Materials wird eine Natronwasserglaslösung zudosiert. Durch gleichzeitige Zugabe von 10%iger Salzsäure wird der pH-Wert bei 4 bis 10, vorzugsweise bei 6,5 bis 8,5 konstant gehalten. Nach Zugabe der Wasserglaslösung wird noch 30 min nachgerührt.

Es ist zusätzlich möglich, die Pulverfarbe des Pigmentes zu verändern, durch Aufbringen weiterer Schichten, wie z.B. farbige Metalloxide oder Berliner Blau, Verbindungen der Übergangsmetalle wie z.B. Fe, Cu, Ni, Co, Mn, Cr oder organische Verbindungen wie Farbstoffe oder Farblacke.

Es ist weiterhin möglich, das fertige Pigment einer Nachbeschichtung oder Nachbehandlung zu unterziehen, was die Licht-, Wetter- und chemische Stabilität weiter erhöht, oder die Handhabung des Pigments, insbesondere die Einarbeitung in unterschiedliche Medien, erleichtert. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebene Verfahren in Frage.

Die zusätzlich aufgebrachten Stoffe machen nur etwa 0,1 bis 5 Gew.-%, vorzugsweise etwa 0,5 bis 3 Gew.-%, des gesamten Pigmentes aus.

Das erfindungsgemäße Pigment kann noch zusätzlich mit schwerlöslichen, fest haftenden anorganischen oder organischen Farbmitteln beschichtet werden. Bevorzugt werden Farblacke und insbesondere Aluminiumfarblacke verwendet. Dazu wird eine Aluminiumhydroxidschicht aufgefällt, die in einem zweiten Schritt mit einem Farblack verlackt wird. Das Verfahren ist in DE 24 29 762 und DE 29 28 287 näher beschrieben.

Bevorzugt ist auch eine zusätzliche Beschichtung mit Komplexsalzpigmenten, insbesondere Cyanoferratkomplexen, wie zum Beispiel Berliner Blau und Turnbulls Blau, wie sie in EP 0141 173 und DE 23 13 332 beschrieben ist.

Das erfindungsgemäße Pigment kann auch mit organischen Farbstoffen und insbesondere mit Phthalocyanin- oder Metallphthalocyanin- und/oder Indanthrenfarbstoffen nach DE 40 09 567 beschichtet werden. Dazu wird eine Suspension des Pigmentes in einer Lösung des Farbstoffes hergestellt und diese dann mit einem Lösungsmittel zusammengebracht, in welchem der Farbstoff schwer löslich oder unlöslich ist.

Weiterhin können auch Metallchalkogenide bzw. Metallchalkogenidhydrate und Ruß für eine zusätzliche Beschichtung eingesetzt werden.

Das Pigment kann auf übliche Weise zur Pigmentierung von Lacken, Druckfarben, Kunststoffen, Kosmetika und Glasuren für Keramiken und Gläser verwendet werden.

Die erfindungsgemäßen Pigmente besitzen ein hohes Deckvermögen und zeigen einen ausgeprägten Farbflop. Das bedeutet, daß die Interferenzfarben sehr stark vom Betrachtungswinkel abhängig sind. Auf Grund dieser Eigenschaften, beispielsweise bei ihrer Verwendung in Autolacken, ist die Zumischung von Absorptionspigmenten, wenn überhaupt, nur in geringen Mengen erforderlich. Dadurch bleibt ein Farbflop in vollem Umfang erhalten.

Die folgenden Beispiele sollen die Erfindung näher erläutern, ohne sie zu begrenzen.

Beispiel 1

100 g Graphitplättchen werden in 2 l VE-Wasser suspendiert und unter ständigem Rühren auf 75 °C aufgeheizt.

Mit konzentrierter Salzsäure (37%ig) wird der pH-Wert auf 2,2 eingestellt. Zu dieser Suspension werden innerhalb von 280 min 550 ml einer wäßrigen $TiCl_4$-Lösung (400 g $TiCl_4$/l) hinzudosiert. Der pH-Wert wird während der gesamten Zugabe mit 32%iger NaOH-Lösung bei 2,2 konstant gehalten.

Nach beendeter Zugabe wird zur Vervollständigung der Fällung noch 45 min bei 75 °C nachgerührt.

Der pH-Wert der Suspension wird mit 32%iger NaOH-Lösung auf 7,5 angehoben und innerhalb von 40 min 210 g einer Natronwasserglaslösung (13,5 Gew.-% $SiO_2$) zudosiert. Dabei wird der pH-Wert mit 10%iger Salzsäure konstant auf 7,5 gehalten. Nach beendeter Zugabe wird zur Vervollständigung der Fällung noch 45 min bei 75 °C nachgerührt.

Der pH-Wert der Suspension wird mit 10%iger Salzsäure auf 2,2 abgesenkt.

Innerhalb von 320 min werden 630 ml einer wäßrigen $TiCl_4$-Lösung (400 g $TiCl_4$/l) hinzudosiert. Der pH-Wert wird während der gesamten Zugabe mit 32%iger NaOH-Lösung bei 2,2 konstant gehalten.

Nach beendeter Zugabe wird zur Vervollständigung der Fällung noch 45 min bei 75 °C nachgerührt.

Anschließend läßt man auf Raumtemperatur abkühlen, filtriert das erhaltene Pigment ab, wäscht mit VE-Wasser salzfrei und trocknet bei 110 °C.

Danach wird das Pigment 30 min bei 700 °C in $N_2$-Atmosphäre geglüht.

Das so erhaltene Pigment zeigt eine dunkelgrüne Pulverfarbe mit tiefgrüner Interferenzfarbe.

Beispiel 2

100 g Graphitplättchen werden in 2 l VE-Wasser suspendiert und unter ständigem Rühren auf 80 °C aufgeheizt.

Mit konzentrierter Salzsäure (37%ig) wird der pH-Wert auf 2,0 eingestellt.

Zu dieser Suspension werden innerhalb von 25 min 100 ml einer 3%igen $SnCl_4$-Lösung zudosiert. Der pH-Wert wird während dieser Zeit mit 32%iger NaOH-Lösung konstant auf 2,0 gehalten.

Nach einer 15minütigen Nachrührzeit wird der pH-Wert mittels 10%iger Salzsäure auf 1,8 gebracht und innerhalb von 300 min 600 ml einer wäßrigen $TiCl_4$-Lösung (400 g $TiCl_4$/l) hinzudosiert. Der pH-Wert wird während der gesamten Zugabe mit 32%iger NaOH-Lösung bei 1,8 konstant gehalten.

Nach beendeter Zugabe wird zur Vervollständigung der Fällung noch 15 min bei 80 °C nachgerührt.

Der pH-Wert der Suspension wird mit 32%iger NaOH-Lösung auf 7,5 angehoben und innerhalb von 216 min 430 g einer Natronwasserglaslösung (13,5 Gew.-% $SiO_2$) zudosiert. Dabei wird der pH-Wert mit 10%iger Salzsäure konstant auf 7,5 gehalten. Nach beendeter Zugabe wird zur Vervollständigung der Fällung noch 15 min bei 80 °C nachgerührt.

Der pH-Wert der Suspension wird mit 10%iger Salzsäure auf 2,0 abgesenkt.

Innerhalb von 25 min werden 100 ml einer 3%igen $SnCl_4$-Lösung zudosiert.

Dabei wird während der gesamten Zeit der pH-Wert mit 32%iger NaOH konstant auf 2,0 gehalten.

Nach einer 15minütigen Nachrührzeit wird der pH-Wert mittels 10%iger Salzsäure auf 1,8 abgesenkt und innerhalb von 296 min werden 590 ml einer wäßrigen $TiCl_4$-Lösung (400 g $TiCl_4$/l) hinzudosiert. Der pH-Wert wird während der gesamten Zugabe mit 32%iger NaOH-Lösung bei 1,8 konstant gehalten.

Nach beendeter Zugabe wird zur Vervollständigung der Fällung noch 15 min bei 80 °C nachgerührt.

Anschließend läßt man auf Raumtemperatur abkühlen, filtriert das erhaltene Pigment ab, wäscht mit VE-Wasser salzfrei und trocknet bei 110 °C.

Danach wird das Pigment 30 min bei 700 °C in einer Stickstoffatmosphäre geglüht.

Man erhält ein Pigment von dunkelgrüner Pulverfarbe mit einem ausgeprägten Farbflop.

Beispiel 3

100 g Iriodin® 602, ein Glimmerpigment mit einer Beschichtung aus $TiO_2$ und Ilmenit, werden in 2 l VE-Wasser suspendiert und unter ständigem Rühren auf 75 °C aufgeheizt.

Mit konzentrierter Salzsäure (37%ig) wird der pH-Wert auf 2,2 eingestellt.

Zu dieser Suspension werden innerhalb von 350 min 690 ml einer wäßrigen $TiCl_4$-Lösung (400 g $TiCl_4$/l) hinzudosiert. Der pH-Wert wird während der gesamten Zugabe mit 32%iger NaOH-Lösung bei 2,2 konstant gehalten.

Nach beendeter Zugabe wird zur Vervollständigung der Fällung noch 45 min bei 75 °C nachgerührt.

Der pH-Wert einer Suspension wird mit 32%iger NaOH-Lösung auf 7,5 angehoben und innerhalb von 50 min 260 g einer Natronwasserglaslösung (13,5 Gew.-% $SiO_2$) zudosiert. Dabei wird der pH-Wert mit 10%iger Salzsäure konstant auf 7,5 gehalten. Nach beendeter Zugabe wird zur Vervollständigung der Fällung noch 45 min bei 75°C nachgerührt.

Der pH-Wert der Suspension wird mit 10%iger Salzsäure auf 2,2 abgesenkt.

Innerhalb von 400 min werden 790 ml einer wäßrigen $TiCl_4$-Lösung (400 g $TiCl_4$/l) hinzudosiert. Der

pH-Wert wird während der gesamten Zugabe mit 32%iger NaOH-Lösung bei 2,2 konstant gehalten.

Nach beendeter Zugabe wird zur Vervollständigung der Fällung noch 45 min bei 75 °C nachgerührt.

Anschließend läßt man auf Raumtemperatur abkühlen, filtriert das erhaltene Pigment ab, wäscht mit VE-Wasser salzfrei und trocknet bei 110 °C.

Danach wird das Pigment 30 min bei 850 °C in $N_2$-Atmosphäre geglüht.

Das so erhaltene Pigment zeigt eine graugrüne Pulverfarbe mit tiefgrüner Interferenzfarbe.

Beispiel 4

100 g Iriodin® 602, ein Glimmerpigment mit einer Beschichtung aus $TiO_2$ und Ilmenit, werden in 2 l VE-Wasser suspendiert und unter ständigem Rühren auf 80 °C aufgeheizt.

Mit konzentrierter Salzsäure (37%ig) wird der pH-Wert auf 2,0 eingestellt.

Zu dieser Suspension werden innerhalb von 25 min 100 ml einer 3%igen $SnCl_4$-Lösung zudosiert. Der pH-Wert wird während dieser Zeit mit 32%iger NaOH-Lösung konstant auf 2,0 gehalten.

Nach einer 15minütigen Nachrührzeit wird der pH-Wert mittels 10%iger Salzsäure auf 1,8 gebracht und innerhalb von 375 min 750 ml einer wäßrigen $TiCl_4$-Lösung (400 g $TiCl_4$/l) hinzudosiert. Der pH-Wert wird während der gesamten Zugabe mit 32%iger NaOH-Lösung bei 1,8 konstant gehalten. Nach beendeter Zugabe wird zur Vervollständigung der Fällung noch 15 min bei 80 °C nachgerührt.

Der pH-Wert der Suspension wird mit 32%iger NaOH-Lösung auf 7,5 angehoben und innerhalb von 270 min 533 g einer Natronwasserglaslösung (13,5 Gew.-% $SiO_2$) zudosiert. Dabei wird der pH-Wert mit 10%iger Salzsäure konstant auf 7,5 gehalten. Nach beendeter Zugabe wird zur Vervollständigung der Fällung noch 15 min bei 80 °C nachgerührt.

Der pH-Wert der Suspension wird mit 10%iger Salzsäure auf 2,0 abgesenkt.

Innerhalb von 25 min werden 100 ml einer 3%igen $SnCl_4$-Lösung zudosiert.

Dabei wird während der gesamten Zeit der pH-Wert mit 32%iger NaOH konstant auf 2,0 gehalten.

Nach einer 15minütigen Nachrührzeit wird der pH-Wert mittels 10%iger Salzsäure auf 1,8 abgesenkt und innerhalb von 370 min werden 740 ml einer wäßrigen $TiCl_4$-Lösung (400 g $TiCl_4$/l) hinzudosiert. Der pH-Wert wird während der gesamten Zugabe mit 32%iger NaOH-Lösung bei 1,8 konstant gehalten.

Nach beendeter Zugabe wird zur Vervollständigung der Fällung noch 15 min bei 80 °C nachgerührt.

Anschließend läßt man auf Raumtemperatur abkühlen, filtriert das erhaltene Pigment ab, wäscht mit VE-Wasser salzfrei und trocknet bei 110 °C.

Danach wird das Pigment 30 min bei 850 °C in $N_2$-Atmosphäre geglüht.

Man erhält ein Pigment von graugrüner Pulverfarbe mit einem ausgeprägten Farbflop.

### Beispiel 5

100 g mit Graphit deckend beschichteter Glimmer mit einer Teilchengröße von 10-50 μm werden in 2 l VE-Wasser suspendiert und unter ständigem Rühren auf 75 °C aufgeheizt.

Mit konzentrierter Salzsäure (37%ig) wird der pH-Wert auf 2,2 eingestellt.

Zu dieser Suspension werden innerhalb von 350 min 690 ml einer wäßrigen $TiCl_4$-Lösung (400 g $TiCl_4$/l) hinzudosiert. Der pH-Wert wird während der gesamten Zugabe mit 32%iger NaOH-Lösung bei 2,2 konstant gehalten. Nach beendeter Zugabe wird zur Vervollständigung der Fällung noch 45 min bei 75 °C nachgerührt.

Der pH-Wert der Suspension wird mit 32%iger NaOH-Lösung auf 7,5 angehoben und innerhalb von 50 min 260 g einer Natronwasserglaslösung (13,5 Gew.-% $SiO_2$) zudosiert. Dabei wird der pH-Wert mit 10%iger Salzsäure konstant auf 7,5 gehalten. Nach beendeter Zugabe wird zur Vervollständigung der Fällung noch 45 min bei 75 °C nachgerührt.

Der pH-Wert der Suspension wird mit 10%iger Salzsäure auf 2,2 abgesenkt.

Innerhalb von 400 min werden 790 ml wäßrigen $TiCl_4$-Lösung (400 g $TiCl_4$/l) hinzudosiert. Der pH-Wert wird während der gesamten Zugabe mit 32%iger NaOH-Lösung bei 2,2 konstant gehalten.

Nach beendeter Zugabe wird zur Vervollständigung der Fällung noch 45 min bei 75 °C nachgerührt.

Anschließend läßt man auf Raumtemperatur abkühlen, filtriert das erhaltene Pigment ab, wäscht mit VE-Wasser salzfrei und trocknet bei 110 °C.

Danach wird das Pigment 30 min bei 700 °C in $N_2$-Atmosphäre geglüht.

Das so erhaltene Pigment zeigt eine dunkelgrüne Pulverfarbe mit tiefgrüner Interferenzfarbe.

### Beispiel 6

100 g mit Graphit deckend beschichteter Glimmer mit einer Teilchengröße von 10-50 μm werden in 2 l VE-Wasser suspendiert und unter ständigem Rühren auf 80 °C aufgeheizt.

Mit konzentrierter Salzsäure (37%ig) wird der pH-Wert auf 2,0 eingestellt.

Zu dieser Suspension werden innerhalb von 25 min 100 ml einer 3%igen $SnCl_4$-Lösung zudosiert. Der pH-Wert wird während dieser Zeit mit 32%iger NaOH-Lösung konstant auf 2,0 gehalten.

Nach einer 15minütigen Nachrührzeit wird der pH-Wert mittels 10%iger Salzsäure auf 1,8 gebracht und innerhalb von 375 min 750 ml einer wäßrigen $TiCl_4$-Lösung (400 g $TiCl_4$/l) hinzudosiert. Der pH-Wert wird während der gesamten Zugabe mit 32%iger NaOH-Lösung bei 1,8 konstant gehalten.

Nach beendeter Zugabe wird zur Vervollständigung der Fällung noch 15 min bei 80 °C nachgerührt.

Der pH-Wert der Suspension wird mit 32%iger NaOH-Lösung auf 7,5 angehoben und innerhalb von 270 min 533 g einer Natronwasserglaslösung (13,5 Gew.-% $SiO_2$) zudosiert. Dabei wird der pH-Wert mit 10%iger Salzsäure konstant auf 7,5 gehalten. Nach beendeter Zugabe wird zur Vervollständigung der Fällung noch 15 min bei 80 °C nachgerührt.

Der pH-Wert der Suspension wird mit 10%iger Salzsäure auf 2,0 abgesenkt.

Innerhalb von 25 min werden 100 ml einer 3%igen $SnCl_4$-Lösung zudosiert.

Dabei wird während der gesamten Zeit der pH-Wert mit 32%iger NaOH konstant auf 2,0 gehalten.

Nach einer 15minütigen Nachrührzeit wird der pH-Wert mittels 10%iger Salzsäure auf 1,8 abgesenkt und innerhalb von 370 min werden 740 ml einer wäßrigen $TiCl_4$-Lösung (400 g $TiCl_4$/l) hinzudosiert. Der pH-Wert wird während der gesamten Zugabe mit 32%iger NaOH-Lösung bei 1,8 konstant gehalten.

Nach beendeter Zugabe wird zur Vervollständigung der Fällung noch 15 min bei 80 °C nachgerührt.

Anschließend läßt man auf Raumtemperatur abkühlen, filtriert das erhaltene Pigment ab, wäscht mit VE-Wasser salzfrei und trocknet bei 110 °C.

Danach wird das Pigment 30 min bei 700 °C in einer Stickstoffatmosphäre geglüht.

Man erhält ein Pigment von dunkelgrüner Pulverfarbe mit einem ausgeprägten Farbflop.

### Beispiel 7

105 g eines Carbon Inclusion Pigmentes mit blauer Interferenzfarbe und einer Teilchengröße von 10-50 μm werden in 2 l VE-Wasser suspendiert und unter ständigem Rühren auf 75 °C aufgeheizt.

Das Pigment enthält eine $TiO_2$-Schicht, in die Kohlenstoff eingelagert ist. Der pH-Wert der Suspension wird mit 32%iger NaOH-Lösung auf 7,5 angehoben und innerhalb von 75 min 153 g einer Natronwasserglaslösung (13,5 Gew.-% $SiO_2$) zudosiert. Dabei wird der pH-Wert mit 10%iger Salzsäure konstant auf 7,5 gehalten. Nach beendeter Zugabe wird zur Vervollständigung der Fällung noch 45 min bei 75 °C nachgerührt.

Der pH-Wert der Suspension wird mit 10%iger Salzsäure auf 2,2 abgesenkt.

Innerhalb von 165 min werden 330 ml einer wäßrigen $TiCl_4$-Lösung (400 g $TiCl_4$/l) hinzudosiert. Der pH-Wert wird während der gesamten Zugabe mit 32%iger NaOH-Lösung bei 2,2 konstant gehalten.

Nach beendeter Zugabe wird zur Vervollständigung der Fällung noch 45 min bei 75 °C nachgerührt.

Anschließend läßt man auf Raumtemperatur abkühlen, filtriert das erhaltene Pigment ab, wäscht mit VE-Wasser salzfrei und trocknet bei 110 °C. Danach wird das Pigment 30 min bei 850 °C in Stickstoffatmosphäre geglüht.

Man erhält ein Pigment mit graublauer Körperfarbe und tiefblauer Interferenzfarbe.

Beispiel 8

126 g eines Carbon Inclusion Pigmentes mit blauer Interferenzfarbe und einer Teilchengröße von 10-50 μm werden in 2 l VE-Wasser suspendiert und unter ständigem Rühren auf 80 °C aufgeheizt.

Das Pigment enthält eine $TiO_2$-Schicht, in die Kohlenstoff eingelagert ist.

Der pH-Wert der Suspension wird mit 32%iger NaOH-Lösung auf 7,5 angehoben und innerhalb von 270 min 533 g einer Natronwasserglaslösung (13,5 Gew.-% $SiO_2$) zudosiert. Dabei wird der pH-Wert mit 10%iger Salzsäure konstant auf 7,5 gehalten. Nach beendeter Zugabe wird zur Vervollständigung der Fällung noch 15 min bei 80 °C nachgerührt.

Der pH-Wert der Suspension wird mit 10%iger Salzsäure auf 2,0 abgesenkt.

Innerhalb von 25 min werden 100 ml einer 3%igen $SnCl_4$-Lösung zudosiert. Dabei wird während der gesamten Zeit der pH-Wert mit 32%iger NaOH-Lösung konstant auf 2,0 gehalten.

Nach einer 15minütigen Nachrührzeit wird der pH-Wert mittels 10%iger Salzsäure auf 1,8 abgesenkt und innerhalb von 370 min 740 ml einer wäßrigen $TiCl_4$-Lösung (400 g $TiCl_4$/l) hinzudosiert. Der pH-Wert wird während der gesamten Zugabe mit 32%iger NaOH-Lösung bei 1,8 konstant gehalten.

Nach beendeter Zugabe wird zur Vervollständigung der Fällung noch 15 min bei 80 °C nachgerührt.

Anschließend läßt man auf Raumtemperatur abkühlen, filtriert das erhaltene Pigment ab, wäscht mit VE-Wasser salzfrei und trocknet bei 110 °C. Danach wird das Pigment 30 min bei 850 °C in Stickstoffatmosphäre geglüht.

Das so erhaltene Pigment zeigt eine graugrüne Körperfarbe mit einem ausgeprägten Farbflop.

Beispiel 9

100 g mit Graphit semitransparent beschichteter Glimmer mit einer Teilchengröße von 10-50 μm werden in 2 l VE-Wasser suspendiert und unter ständigem Rühren auf 75 °C aufgeheizt.

Mit konzentrierter Salzsäure (37%ig) wird der pH-Wert auf 2,2 eingestellt.

Zu dieser Suspension werden innerhalb von 350 min 690 ml einer wäßrigen $TiCl_4$-Lösung (400 g $TiCl_4$/l) hinzudosiert. Der pH-Wert wird während der gesamten Zugabe mit 32%iger NaOH-Lösung bei 2,2 konstant gehalten.

Nach beendeter Zugabe wird zur Vervollständigung der Fällung noch 45 min bei 75 °C nachgerührt.

Der pH-Wert der Suspension wird mit 32%iger NaOH-Lösung auf 7,5 angehoben und innerhalb von 50 min 260 g einer Natronwasserglaslösung (13,5 Gew.-% $SiO_2$) zudosiert. Dabei wird der pH-Wert mit 10%iger Salzsäure konstant auf 7,5 gehalten. Nach beendeter Zugabe wird zur Vervollständigung der Fällung noch 45 min bei 75 °C nachgerührt.

Der pH-Wert der Suspension wird mit 10%iger Salzsäure auf 2,2 abgesenkt.

Innerhalb von 400 min werden 790 ml wäßrigen $TiCl_4$-Lösung (400 g $TiCl_4$/l) hinzudosiert. Der pH-Wert wird während der gesamten Zugabe mit 32%iger NaOH-Lösung bei 2,2 konstant gehalten.

Nach beendeter Zugabe wird zur Vervollständigung der Fällung noch 45 min bei 75 °C nachgerührt.

Anschließend läßt man auf Raumtemperatur abkühlen, filtriert das erhaltene Pigment ab, wäscht mit VE-Wasser salzfrei und trocknet bei 110 °C.

Danach wird das Pigment 30 min bei 700 °C in $N_2$-Atmosphäre geglüht.

Das so erhaltene Pigment zeigt eine graugrüne Pulverfarbe mit tiefgrüner Interferenzfarbe.

Beispiel 10

100 g mit Graphit semitransparent beschichteter Glimmer mit einer Teilchengröße von 10-50 μm werden in 2 l VE-Wasser suspendiert und unter ständigem Rühren auf 80 °C aufgeheizt.

Mit konzentrierter Salzsäure (37%ig) wird der pH-Wert auf 2,0 eingestellt.

Zu dieser Suspension werden innerhalb von 25 min 100 ml einer 3%igen $SnCl_4$-Lösung zudosiert. Der pH-Wert wird während dieser Zeit mit 32%iger NaOH-Lösung konstant auf 2,0 gehalten.

Nach einer 15minütigen Nachrührzeit wird der pH-Wert mittels 10%iger Salzsäure auf 1,8 gebracht und innerhalb von 375 min 750 ml einer wäßrigen $TiCl_4$-Lösung (400 g $TiCl_4$/l) hinzudosiert. Der pH-Wert wird während der gesamten Zugabe mit 32%iger NaOH-Lösung bei 1,8 konstant gehalten.

Nach beendeter Zugabe wird zur Vervollständigung der Fällung noch 15 min bei 80 °C nachgerührt.

Der pH-Wert der Suspension wird mit 32%iger NaOH-Lösung auf 7,5 angehoben und innerhalb von 270 min 533 g einer Natronwasserglaslösung (13,5 Gew.-% $SiO_2$) zudosiert. Dabei wird der pH-Wert mit 10%iger Salzsäure konstant auf 7,5 gehalten. Nach beendeter Zugabe wird zur Vervollständigung der Fällung noch 15 min bei 80 °C nachgerührt.

Der pH-Wert der Suspension wird mit 10%iger Salzsäure auf 2,0 abgesenkt.

Innerhalb von 25 min werden 100 ml einer 3%igen $SnCl_4$-Lösung zudosiert. Dabei wird während der gesamten Zeit der pH-Wert mit 32%iger NaOH konstant auf 2,0 gehalten.

Nach einer 15minütigen Nachrührzeit wird der pH-Wert mittels 10%iger Salzsäure auf 1,8 abgesenkt und innerhalb von 370 min werden 740 ml einer wäßrigen $TiCl_4$-Lösung (400 g $TiCl_4$/l) hinzudosiert. Der

pH-Wert wird während der gesamten Zugabe mit 32%iger NaOH-Lösung bei 1,8 konstant gehalten.

Nach beendeter Zugabe wird zur Vervollständigung der Fällung noch 15 min bei 80 °C nachgerührt.

Anschließend läßt man auf Raumtemperatur abkühlen, filtriert das erhaltene Pigment ab, wäscht mit VE-Wasser salzfrei und trocknet bei 110 °C. Danach wird das Pigment 30 min bei 700 °C in $N_2$-Atmosphäre geglüht.

Man erhält ein Pigment von graugrüner Pulverfarbe mit einem ausgeprägten Farbflop.

Beispiel 11

75 g durch eingelagerten Ruß gefärbte $SiO_2$-Flakes mit einer Teilchengröße von 10-50 μm werden in 1,5 l VE-Wasser suspendiert und unter ständigem Rühren auf 75 °C aufgeheizt.

Mit konzentrierter Salzsäure (37%ig) wird der pH-Wert auf 2,2 eingestellt.

Zu dieser Suspension werden innerhalb von 350 min 690 ml einer wäßrigen $TiCl_4$-Lösung (400 g $TiCl_4$/l) hinzudosiert. Der pH-Wert wird während der gesamten Zugabe mit 32%iger NaOH-Lösung bei 2,2 konstant gehalten.

Nach beendeter Zugabe wird zur Vervollständigung der Fällung noch 45 min bei 75 °C nachgerührt.

Der pH-Wert der Suspension wird mit 32%iger NaOH-Lösung auf 7,5 angehoben und innerhalb von 50 min 260 g einer Natronwasserglaslösung (13,5 Gew.-% $SiO_2$) zudosiert. Dabei wird der pH-Wert mit 10%iger Salzsäure konstant auf 7,5 gehalten. Nach beendeter Zugabe wird zur Vervollständigung der Fällung noch 45 min bei 75 °C nachgerührt.

Der pH-Wert der Suspension wird mit 10%iger Salzsäure auf 2,2 abgesenkt.

Innerhalb von 400 min werden 790 ml einer wäßrigen $TiCl_4$-Lösung (400 g $TiCl_4$/l) hinzudosiert. Der pH-Wert wird während der gesamten Zugabe mit 32%iger NaOH-Lösung bei 2,2 konstant gehalten.

Nach beendeter Zugabe wird zur Vervollständigung der Fällung noch 45 min bei 75 °C nachgerührt.

Anschließend läßt man auf Raumtemperatur abkühlen, filtriert das erhaltene Pigment ab, wäscht mit VE-Wasser salzfrei und trocknet bei 110 °C.

Danach wird das Pigment 30 min bei 700 °C geglüht.

Das so erhaltene Pigment zeigt eine graugrüne Pulverfarbe mit tiefgrüner Interferenzfarbe.

Beispiel 12

100 g durch eingelagerten Ruß gefärbte $SiO_2$-Flakes mit einer Teilchengröße von 10-50 μm werden in 2 l VE-Wasser suspendiert und unter ständigem Rühren auf 80 °C aufgeheizt.

Mit konzentrierter Salzsäure (37%ig) wird der pH-Wert auf 2,0 eingestellt.

Zu dieser Suspension werden innerhalb von 100 min 300 ml einer 3%igen $SnCl_4$-Lösung zudosiert. Der pH-Wert wird während dieser Zeit mit 32%iger NaOH-Lösung konstant auf 2,0 gehalten.

Nach einer 15minütigen Nachrührzeit wird der pH-Wert mittels 10%iger Salzsäure auf 1,8 gebracht und innerhalb von 340 min 1020 ml einer wäßrigen $TiCl_4$-Lösung (400 g $TiCl_4$/l) hinzudosiert. Der pH-Wert wird während der gesamten Zugabe mit 32%iger NaOH-Lösung bei 1,8 konstant gehalten.

Nach beendeter Zugabe wird zur Vervollständigung der Fällung noch 15 min bei 80 °C nachgerührt.

Der pH-Wert der Suspension wird mit 32%iger NaOH-Lösung auf 7,5 angehoben und innerhalb von 230 min 704 g einer Natronwasserglaslösung (13,5 Gew.-% $SiO_2$) zudosiert. Dabei wird der pH-Wert mit 10%iger Salzsäure konstant auf 7,5 gehalten. Nach beendeter Zugabe wird zur Vervollständigung der Fällung noch 15 min bei 80 °C nachgerührt.

Der pH-Wert der Suspension wird mit 10%iger Salzsäure auf 2,0 abgesenkt.

Innerhalb von 100 min werden 300 ml einer 3%igen $SnCl_4$-Lösung zudosiert. Dabei wird während der gesamten Zeit der pH-Wert mit 32%iger NaOH konstant auf 2,0 gehalten.

Nach einer 15minütigen Nachrührzeit wird der pH-Wert mittels 10%iger Salzsäure auf 1,8 abgesenkt und innerhalb von 300 min werden 922 ml einer wäßrigen $TiCl_4$-Lösung (400 g $TiCl_4$/l) hinzudosiert. Der pH-Wert wird während der gesamten Zugabe mit 32%iger NaOH-Lösung bei 1,8 konstant gehalten.

Nach beendeter Zugabe wird zur Vervollständigung der Fällung noch 15 min bei 80 °C nachgerührt.

Anschließend läßt man auf Raumtemperatur abkühlen, filtriert das erhaltene Pigment ab, wäscht mit VE-Wasser salzfrei und trocknet bei 110 °C.

Danach wird das Pigment 30 min bei 700 °C geglüht.

Man erhält ein Pigment von graugrüner Pulverfarbe mit einem ausgeprägten Farbflop.

Beispiel 13

105 g eines blaugrünen Interferenzpigmentes, bestehend aus Glimmer, der mit Titandioxid beschichtet ist und zusätzlich eine äußere Schicht aus einem Mischoxid der Formel $Cu_XMn_{3-X}O_4$ besitzt, werden in 2 l VE-Wasser suspendiert und unter ständigem Rühren auf 75 °C aufgeheizt.

Der pH-Wert der Suspension wird auf 7,5 eingestellt und innerhalb von 75 min 153 g einer Natronwasserglaslösung (13,5 Gew.-% $SiO_2$) zudosiert.

Dabei wird der pH-Wert mit 10%iger Salzsäure konstant auf 7,5 gehalten.

Nach beendeter Zugabe wird zur Vervollständigung der Fällung noch 45 min bei 75 °C nachgerührt.

Der pH-Wert der Suspension wird mit 10%iger Salzsäure auf 2,2 abgesenkt.

Innerhalb von 165 min werden 330 ml einer wäßrigen TiCl$_4$-Lösung (400 g TiCl$_4$/l) hinzudosiert. Der pH-Wert wird während der gesamten Zugabe mit 32%iger NaOH-Lösung bei 2,2 konstant gehalten.

Nach beendeter Zugabe wird zur Vervollständigung der Fällung noch 45 min bei 75 °C nachgerührt.

Anschließend läßt man auf Raumtemperatur abkühlen, filtriert das erhaltene Pigment ab, wäscht mit VE-Wasser salzfrei und trocknet bei 110 °C.

Danach wird das Pigment 30 min bei 600 °C geglüht.

Das so erhaltene Pigment zeigt eine grüne Pulverfarbe mit tiefgrüner Interferenzfarbe.

Beispiel 14

126 g eines blaugrünen Interferenzpigmentes, bestehend aus Glimmer, der mit Titandioxid beschichtet ist und zusätzlich eine äußere Schicht aus einem Mischoxid der Formel Cu$_x$Mn$_{3-x}$O$_4$ besitzt, werden in 2 l VE-Wasser suspendiert und unter ständigem Rühren auf 80 °C aufgeheizt.

Der pH-Wert der Suspension wird auf 7,5 eingestellt und innerhalb von 270 min 533 g einer Natronwasserglaslösung (13,5 Gew.-% SiO$_2$) zudosiert. Dabei wird der pH-Wert mit 10%iger Salzsäure konstant auf 7,5 gehalten. Nach beendeter Zugabe wird zur Vervollständigung der Fällung noch 15 min bei 80 °C nachgerührt.

Der pH-Wert der Suspension wird mit 10%iger Salzsäure auf 2,0 abgesenkt.

Innerhalb von 25 min werden 100 ml einer 3%igen SnCl$_4$-Lösung zudosiert.

Dabei wird während der gesamten Zeit der pH-Wert mit 32%iger NaOH konstant auf 2,0 gehalten.

Nach einer 15minütigen Nachrührzeit wird der pH-Wert mittels 10%iger Salzsäure auf 1,8 abgesenkt und innerhalb von 370 min werden 740 ml einer wäßrigen TiCl$_4$-Lösung (400 g TiCl$_4$/l) hinzudosiert. Der pH-Wert wird während der gesamten Zugabe mit 32%iger NaOH-Lösung bei 1,8 konstant gehalten.

Nach beendeter Zugabe wird zur Vervollständigung der Fällung noch 15 min bei 80 °C nachgerührt.

Anschließend läßt man auf Raumtemperatur abkühlen, filtriert das erhaltene Pigment ab, wäscht mit VE-Wasser salzfrei und trocknet bei 110 °C.

Danach wird das Pigment 30 min bei 600 °C geglüht.

Man erhält ein Pigment von grüner Pulverfarbe mit einem ausgeprägten Farbflop.

**Patentansprüche**

1.  Perlglanzpigment auf Basis von mehrfach beschichteten, plättchenförmigen, nichtmetallischen Substraten, die opak oder semiopak sind und die mindestens

a) eine erste Schicht aus einem Metalloxid mit hoher Brechzahl, ausgewählt aus der Gruppe bestehend aus TiO$_2$, ZrO$_2$, Fe$_2$O$_3$, (SnSb)O$_2$, Fe$_3$O$_4$, Cr$_2$O$_3$, ZnO oder einem Gemisch aus diesen Oxiden, oder einem Metall,

b) eine zweite Schicht aus einem Metalloxid mit niedriger Brechzahl, ausgewählt aus der Gruppe bestehend aus SiO$_2$, Al$_2$O$_3$ oder einer Mischung daraus,

c) eine dritte Schicht aus einem Metalloxid mit hoher Brechzahl, ausgewählt aus der Gruppe bestehend aus TiO$_2$, ZrO$_2$, Fe$_2$O$_3$, (SnSb)O$_2$, Fe$_3$O$_4$, Cr$_2$O$_3$, ZnO oder einem Gemisch aus diesen Oxiden, oder einem Metall und gegebenenfalls

d) eine Nachbeschichtung aufweisen.

2.  Perlglanzpigment nach Anspruch 1, **dadurch gekennzeichnet, dass** das absorbierende plättchenförmige Substrat aus Graphitplättchen, plättchenförmigen Trägermaterialien, die mit Ilmenit, Magnetit, Cu$_x$Mn$_{3-x}$O$_4$ oder Graphit beschichtet sind, Carbon Inclusion Pigmenten oder SiO$_2$-Flakes mit eingelagertem Ruß besteht.

3.  Perlglanzpigment nach den Ansprüchen 1 oder 2, **dadurch gekennzeichnet, dass** das Metall Nickel oder Aluminium ist.

4.  Verfahren zur Herstellung des Perlglanzpigmentes nach den Ansprüchen 1 bis 3, **dadurch gekennzeichnet, dass** das Substrat in Wasser suspendiert und abwechselnd mit einem Metalloxidhydrat mit hoher Brechzahl, ausgewählt aus der Gruppe bestehend aus Oxidhydraten des Titans, Zirkons, Eisens, Chroms, Zinks, Zinns und Antimons und aus Gemischen aus diesen Oxidhydraten und einem Metalloxidhydrat mit niedriger Brechzahl, ausgewählt aus der Gruppe bestehend aus Oxidhydraten des Siliziums, Aluminiums und Mischungen daraus, durch Zugabe und Hydrolyse der entsprechenden, wasserlöslichen Metallverbindungen beschichtet wird, wobei durch gleichzeitige Zugabe von Säure oder Base der für die Fällung des jeweiligen Metalloxidhydrates notwendige pH-Wert eingestellt und konstant gehalten wird und anschließend das beschichtete Substrat aus der wässrigen Suspension abgetrennt, getrocknet und gegebenenfalls kalziniert wird.

5.  Verfahren nach Anspruch 4, **dadurch gekennzeichnet, dass** das absorbierende plättchenförmige Substrat aus Graphitplättchen, plättchenförmigen Trägermaterialien, die mit Ilmenit, Magnetit, Cu$_x$Mn$_{3-x}$O$_4$ oder Graphit beschichtet sind, Carbon

Inclusion Pigmenten oder $SiO_2$-Flakes mit eingelagertem Ruß besteht.

6. Verfahren zur Herstellung des Perlglanzpigmentes nach den Ansprüchen 1 bis 3, **dadurch gekennzeichnet, dass** die Metalloxide in einem Wirbelbettreaktor durch CVD aufgebracht werden.

7. Verwendung der Pigmente nach den Ansprüchen 1 bis 3 zur Pigmentierung von Lacken, Druckfarben, Kunststoffen, Kosmetika und Glasuren für Keramiken und Gläser.

8. Verwendung nach Anspruch 7, **dadurch gekennzeichnet, dass** die Pigmente als Mischungen mit konventionellen Pigmenten und mit anderen Effektpigmenten eingesetzt werden.

9. Verwendung der Pigmente nach den Ansprüchen 1 bis 3 zur Pigmentierung von Wert- und Sicherheitspapieren und Verpackungen sowie zur Lasermarkierung von polymeren Materialien und Papieren.

10. Lacke, Druckfarben, Kunststoffe, Kosmetika, Keramiken und Gläser, welche mit einem Pigment nach den Ansprüchen 1 bis 3 pigmentiert sind.

11. Lasermarkierbare polymere Materialien und Papiere, Wert- und Sicherheitspapiere und Verpackungen, enthaltend Pigmente nach den Ansprüchen 1 bis 3.

**Claims**

1. Pearl lustre pigment based on multiply coated, platelet-shaped, non-metallic substrates which are opaque or semiopaque and have at least

   a) one first layer comprising a metal oxide of high refractive index selected from the group consisting of $TiO_2$, $ZrO_2$, $Fe_2O_3$, $(SnSb)O_2$, $Fe_3O_4$, $Cr_2O_3$ and $ZnO$, or a mixture of these oxides, or a metal,
   b) one second layer comprising a metal oxide of low refractive index selected from the group consisting of $SiO_2$ and $Al_2O_3$, or a mixture thereof,
   c) one third layer comprising a metal oxide of high refractive index selected from the group consisting of $TiO_2$, $ZrO_2$, $Fe_2O_3$, $(SnSb)O_2$, $Fe_3O_4$, $Cr_2O_3$ and $ZnO$, or a mixture of these oxides, or a metal, and, if desired,
   d) one subsequent coat.

2. Pearl lustre pigment according to Claim 1, **characterized in that** the absorbing platelet-shaped substrate consists of graphite platelets, platelet-shaped carrier materials coated with ilmenite, magnetite, $Cu_xMn_{3-x}O_4$ or graphite, carbon inclusion pigments, or $SiO_2$ flakes with incorporated carbon black.

3. Pearl lustre pigment according to Claim 1 or 2, **characterized in that** the metal is nickel or aluminium.

4. Process for preparing the pearl lustre pigment according to Claims 1 to 3, **characterized in that** the substrate is suspended in water and coated alternately with a metal oxide hydrate of high refractive index selected from the group consisting of oxide hydrates of titanium, zirconium, iron, chromium, zinc, tin and antimony, and mixtures of these oxide hydrates, and a metal oxide hydrate of low refractive index selected from the group consisting of oxide hydrates of silicon and aluminum, and mixtures thereof, by addition and hydrolysis of the corresponding, water-soluble metal compounds, the pH required for the precipitation of the respective metal oxide hydrate being established and kept constant by simultaneous addition of acid or base, and subsequently the coated substrate is separated from the aqueous suspension, dried and, if desired, calcined.

5. Process according to Claim 4, **characterized in that** the absorbing platelet-shaped substrate consists of graphite platelets, platelet-shaped carrier materials coated with ilmenite, magnetite, $Cu_xMn_{3-x}O_4$ or graphite, carbon inclusion pigments, or $SiO_2$ flakes with incorporated carbon black.

6. Process for preparing the pearl lustre pigment according to Claims 1 to 3, **characterized in that** the metal oxides are applied by CVD in a fluidized-bed reactor.

7. Use of the pigments according to Claims 1 to 3 for pigmenting paints, printing inks, plastics, cosmetics and glazes for ceramics and glass.

8. Use according to Claim 7, **characterized in that** the pigments are employed as mixtures with conventional pigments and with other effect pigments.

9. Use of the pigments according to Claims 1 to 3 for pigmenting securities and document papers, and packaging, and for the laser marking of polymeric materials and papers.

10. Paints, printing inks, plastics, cosmetics, ceramics and glasses pigmented with a pigment according to Claims 1 to 3.

11. Laser-markable polymeric materials and papers, securities and document papers, and packaging, comprising pigments according to Claims 1 to 3.

## Revendications

1. Pigment nacré à base de substrats non métalliques sous forme lamellaire comportant plusieurs revêtements, lesdits substrats étant opaques ou semi-opaques et présentant au moins

   a) une première couche d'un oxyde métallique ayant un indice de réfraction élevé, choisi dans le groupe constitué par $TiO_2$, $ZrO_2$, $Fe_2O_3$, $(SnSb)O_2$, $Fe_3O_4$, $Cr_2O_3$, $ZnO$ ou par un mélange de ces oxydes, ou d'un métal,

   b) une deuxième couche d'un oxyde métallique ayant un indice de réfraction faible, choisi dans le groupe constitué par $SiO_2$ ou $Al_2O_3$ ou par un mélange de ceux-ci,

   c) une troisième couche d'un oxyde métallique ayant un indice de réfraction élevé, choisi dans le groupe constitué par $TiO_2$, $ZrO_2$, $Fe_2O_3$, $(SnSb)O_2$, $Fe_3O_4$, $Cr_2O_3$, $ZnO$ ou par un mélange de ces oxydes ou d'un métal et éventuellement

   d) suivie d'un autre revêtement.

2. Pigment nacré selon la revendication 1, **caractérisé en ce que** le substrat sous forme lamellaire, absorbant, est constitué par des lamelles de graphite, des supports sous forme lamellaire, revêtus d'ilménite, de magnétite, de $Cu_xMn_{3-x}O_4$ ou de graphite, par des pigments d'inclusion au carbone, ou par des lamelles de $SiO_2$ avec du noir de carbone incorporé.

3. Pigment nacré selon la revendication 1 ou 2, **caractérisé en ce que** le métal est le nickel ou l'aluminium.

4. Procédé pour la préparation du pigment nacré selon les revendications 1 à 3, **caractérisé en ce que** le substrat est mis en suspension dans l'eau et revêtu alternativement avec un oxyde métallique hydraté ayant un indice de réfraction élevé, choisi dans le groupe constitué par les oxydes hydratés du titane, du zirconium, du fer, du chrome, du zinc, de l'étain et de l'antimoine et par les mélanges de ces oxydes hydratés, et avec un oxyde métallique hydraté ayant un indice de réfraction faible, choisi dans le groupe constitué par les oxydes hydratés du silicium, de l'aluminium et leurs mélanges, par addition et hydrolyse des composés métalliques correspondants solubles dans l'eau, le pH requis pour la précipitation de l'oxyde métallique hydraté concerné étant ajusté par addition simultanée d'acide ou de base et le substrat enrobé étant ensuite séparé de la suspension aqueuse, séché et éventuellement calciné.

5. Procédé selon la revendication 4, **caractérisé en ce que** le substrat sous forme lamellaire, absorbant, est constitué par des lamelles de graphite, des supports sous forme lamellaire, revêtus d'ilménite, de magnétite, de $Cu_xMn_{3-x}O_4$ ou de graphite, par des pigments d'inclusion au carbone ou par des lamelles de $SiO_2$ avec du noir de carbone incorporé.

6. Procédé pour la préparation du pigment nacré selon les revendications 1 à 3, **caractérisé en ce que** les oxydes métalliques sont appliqués par CVD dans un réacteur à lit fluidisé.

7. Utilisation des pigments selon les revendications 1 à 3 pour la pigmentation des vernis, encres d'imprimerie, matières plastiques, cosmétiques et des glaçures pour céramiques et des verres.

8. Utilisation selon la revendication 7, **caractérisée en ce que** les pigments sont utilisés sous forme de mélanges avec des pigments traditionnels et avec d'autres pigments à effet spécial.

9. Utilisation des pigments selon les revendications 1 à 3 pour la pigmentation des papiers titres et papiers de sûreté et emballages, ainsi que pour le marquage au laser de matériaux polymères et de papiers.

10. Vernis, encres d'imprimerie, matières plastiques, cosmétiques, céramiques et verres, pigmentés avec un pigment selon les revendications 1 à 3.

11. Matériaux polymères et papiers marquables au laser, papiers titres et papiers de sûreté et emballages contenant des pigments selon les revendications 1 à 3.